**Europäisches Patentamt**

**European Patent Office**

**Office européen des brevets**

(11) Veröffentlichungsnummer: **0 439 102 A1**

## (12) EUROPÄISCHE PATENTANMELDUNG

(21) Anmeldenummer: **91100705.2**

(22) Anmeldetag: **21.01.91**

(51) Int. Cl.5: **F16L 3/01, H02G 11/00, B25J 19/00**

(30) Priorität: **23.01.90 DE 4001880**

(43) Veröffentlichungstag der Anmeldung:
**31.07.91 Patentblatt 91/31**

(84) Benannte Vertragsstaaten:
**DE ES FR GB IT SE**

(71) Anmelder: **W.L. Gore & Associates GmbH**
**Hermann-Oberth-Strasse 22**

**W-8011 Putzbrunn(DE)**

(72) Erfinder: **Meier, Karl**
**Westenstrasse 12**
**W-8548 Heideck(DE)**

(74) Vertreter: **Klunker . Schmitt-Nilson . Hirsch**
**Winzererstrasse 106**
**W-8000 München 40(DE)**

(54) **Anordnung zum Führen von Leitungen.**

(57) Anordnung zum Führen von Leitungen (37) zwischen einer festen Stelle (23) und einer mit einem hin- und herdrehbaren Körper (11) mitdrehenden Stelle (21), wobei die Leitungen (37) auf zwei bezüglich der Drehachse gegenläufige Schlaufen (25, 27) beidseits der Drehachse des Körpers (11) angeordnet sind.

Fig. 1

# ANORDNUNG ZUM FÜHREN VON LEITUNGEN

Die Erfindung betrifft eine Anordnung zum Führen von Leitungen zwischen einer festen Stelle und einer mit einem hin- und herdrehbaren Körper mitdrehenden Stelle, wobei mehrere Leitungen in Drehachsenrichtung nebeneinander in zur Drehachse konzentrischer U-Schlaufenform verlaufen und die zu verschiedenen Schlaufensträngen gehörenden freien Strangenden mit der festen Stelle bzw. der mitdrehenden Stelle verbunden sind.

Es ist häufig erforderlich, eine sich hin- und herdrehende Vorrichtung mit einer festen Vorrichtung über Leitungen zu verbinden. Beispiele sind Radaranlagen und Roboter, die zunehmend in Produktionsanlagen eingesetzt werden, beispielsweise als Schweißroboter bei der Herstellung von Kraftfahrzeugen.

Derartige Roboter führen im allgemeinen sowohl translatorische als auch rotatorische Bewegungen aus. Die rotatorischen Bewegungen geschehen üblicherweise durch Drehen der Roboterbasis um eine vertikale Drehachse. Dabei soll der Drehwinkel so groß wie möglich sein. Solche Roboter bedürfen vielfältiger Versorgung elektrischer und/oder pneumatischer und/oder hydraulischer Art. Somit ist eine Vielzahl elektrischer Leitungen und/oder fluider Leitungen erforderlich, um den hin- und herrotierenden Roboter mit ortsfesten Versorgungsquellen und Signalempfangsquellen zu verbinden.

Ein Problem besteht darin, daß einerseits möglichst wenig zusätzlicher Raum für das Führen der Leitungen benötigt werden soll und daß die Leitungen andererseits bei den raschen Hin- und Herbewegungen des Roboters nicht zu starken mechanischen Belastungen und Abriebbelastungen ausgesetzt werden sollen.

Eine Möglichkeit der Leitungsführung für eine sich hin- und herdrehende Vorrichtung ist eine Leitungsspirale, deren Enden an die feststehende Vorrichtung bzw. eine sich drehende Roboterbasis angeschlossen sind. Ein Beispiel einer solchen Kabelspirale zeigt die DE-37 15 118 C2. Dort ist eins stabile Spiralform und Spiralführung durch einen die Versorgungsspirale ausdrehend vorspannenden elastischen Außenstrang und einen die Versorgungsspirale eindrehend vorspannenden elastischen Innenstrang erreicht. Der Außenstrang und der Innenstrang sind über die gesamte Länge der Spirale oder an in vorbestimmten Intervallen vorgesehenen Befestigungsstellen an der Versorgungsleitung befestigt. Diese Lösung führt zwar zu einem recht guten Ergebnis, erfordert aber einen hohen Konfektionsaufwand mit entsprechendem Kostenaufwand und erfordert für die Realisierung eines bestimmten maximalen Drehwinkels eine relativ große Kabellänge.

Eine weitere Möglichkeit wäre die Verwendung einer Schleppkette, wie sie aus der DE-PS 23 62 463 bekannt ist, jedoch in auf der Seite liegender Anordnung, wie dies aus Seite 15.2 einer Firmenbroschüre der Firma KABELSCHLEPP betreffend deren "Energieführungseinrichtung Typ 210" bekannt ist. Dabei sind ein Drehkörper und ein dazu konzentrischer feststehender Gehäusekörper unter Freilassung eines ringförmigen Aufnahmeraumes für die Schleppkette vorgesehen. Die Schleppkette ist in Form einer U-förmigen Schlaufe auf einer Seite der Drehachse in den Ringraum gelegt, wobei die freien Enden der beiden Schlaufenstränge an dem Drehkörper bzw. dem feststehenden Gehäuse befestigt sind. Je nach Drehrichtung des Drehkörpers legt sich die Schleppkette an den Außenumfang des Drehkörpers oder an den Innenumfang des feststehenden Gehäuses. Es ist ein maximaler Drehwinkel von etwa 350° erreichbar.

Die Schleppkette wird durch zwei übereinanderstehende Gelenkketten gebildet, deren Kettenglieder je durch einen Steg miteinander verbunden sind, in dem Durchführungsöffnungen vorgesehen sind, in denen die von der Schleppkette zu führenden Leitungen übereinander angeordnet sind. An den Kettengliedern der unteren Gelenkkette befinden sich Tragrollen, mit denen die Schleppkette auf der sie tragenden Unterlage beweglich getragen wird. Von den Kettengliedern der oberen Gelenkkette stehen beidseits seitlich Führungsrollen ab, die auf dem Außenumfang des Drehkörpers bzw. dem Innenumfang des Gehäuses abrollen.

Bei der Lösung mit der bekannten Schleppkette ist der erreichbare maximale Drehwinkel für viele Anwendungsfälle nicht ausreichend groß.

Da die Drehkörper von Robotern meist über eine beträchtliche Anzahl von Leitungen versorgt werden müssen, die sowohl bei der Kabelspirale als auch bei der Schleppkette übereinander angeordnet werden, ergibt sich eine entsprechend große Bauhöhe und entsprechend großer Platzbedarf.

Der Erfindung liegt die Aufgabe zugrunde, eine Anordnung zum Führen von Leitungen verfügbar zu machen, die zu einem geringeren Platzbedarf führt und einen größeren Drehwinkel zuläßt, bei vergleichsweise geringer erforderlicher Kabellänge.

Diese Aufgabe wird mit einer Anordnung der eingangs angegebenen Art dadurch gelöst, daß die Leitungen auf zwei bezüglich der Drehachse des drehbaren Körpers gegenläufige Schlaufen aufgeteilt sind, die sich auf je verschiedener Seite der Drehachse befinden.

Die Verwendung zweier Schlaufen führt zu einer größeren Leitungsspeicherlänge als bei nur einer Schlaufe. Es ist daher ein wesentlich größerer maximaler Drehwinkel erreichbar. Im Vergleich zu einer Kabelspirale ist ein großer Drehwinkel mit erheblich kürzerer Leitungslänge erreichbar.

Dadurch, daß nun in jeder Schlaufe nur noch halb so viele Leitungen übereinander anzuordnen sind wie bei den herkömmlichen Lösungen, läßt sich die Gesamtbauhöhe der Anordnung zum Führen der Leitungen auf etwa die Hälfte verringern.

Vorzugsweise sind die Schlaufen in einem ringförmigen Führungskanal zwischen dem drehbaren Körper und einer Kanalbegrenzungseinrichtung, vorzugsweise in Form eines feststehenden Gehäuses, geführt. In den meisten Fällen ist der Führungskanal innenseitig durch den Außenumfang des drehbaren Körpers und außenseitig durch ein zu dem drehbaren Körper konzentrisch angeordnetes Gehäuse gebildet. Die Anordnung kann aber auch umgekehrt sein, d.h., der Führungskanal kann außenseitig durch den Innenumfang eines drehbaren Körpers und innenseitig durch den Außenumfang eines feststehenden Geräteteils gebildet sein.

Die beiden Schlaufen können je durch eine Schleppkette herkömmlicher Art gebildet sein.

Schleppketten sind allerdings recht aufwendig. Die Leitungen werden an den Durchführungsöffnungen der die Gelenkketten verbindenden Stege stark belastet und beansprucht, was zu hohem Abrieb und Kabelbrüchen führen kann. Daher werden nachfolgend erläuterte Ausführungsformen meist bevorzugt.

Dabei sind konzentrisch zur Drehachse des drehbaren Körpers ringartig aufgereihte Führungsrollen angeordnet, deren Drehachsen parallel zur Drehachse des drehbaren Körpers verlaufen. Diese Führungsrollen sind je zwischen den Schlaufensträngen der einen bzw. der anderen Schlaufe angeordnet. Sie werden vorzugsweise durch die Drehbewegung des drehbaren Körpers direkt oder indirekt derart angetrieben, daß die Umlaufgeschwindigkeit der Führungsrollen gleich der Abrollgeschwindigkeit der Schlaufenstränge auf dem drehbaren Körper und auf den Führungsrollen ist.

Die Führungsrollen können sich an ihrem Außenumfang gegenseitig berühren, um einen gegenseitigen Drehantrieb zu erreichen. Der Antrieb der Führungsrollen erfolgt dabei vorzugsweise dadurch, daß der drehbare Körper bei seiner Drehbewegung den sich auf seinen Umfang aufrollenden Schlaufenstrang mitnimmt und dadurch die in der Schlaufenfront der zugehörigen Schlaufe befindliche Führungsrolle angetrieben wird. Diese treibt dann alle anderen Führungsrollen an.

Bei einer besonders bevorzugten Ausführungsform sind die Außenumfänge der Führungsrollen und/oder der Außenumfang und der Innenumfang des Führungskanals je mit Führungsausnehmungen versehen, deren Zahl und Form von der Anzahl und den Abmessungen der zu führenden Leitungen abhängen. Die Führungsausnehmungen können unterschiedlich gestaltet sein, um Leitungen unterschiedlichen Querschnitts aufnehmen zu können. Auf gleicher axialer Höhe befindliche Führungsausnehmungen müssen allerdings bei allen Führungsrollen gleich gestaltet sein, da die Führungsrollen, um welche jede Schlaufe läuft, während der Drehung des drehbaren Körpers ihre Zuordnung zu der einen oder der anderen Schlaufe wechseln können.

Die Führungsrollen können an jedem axialen Längsende in einem Führungsschlitz je einer Führungsplatte verschiebbar und drehbar gehalten sein. Mindestens eine der Führungsnuten kann als T-Nut ausgebildet sein, wobei die darin gelagerten Achsstummel der Führungsrollen je mit einem komplementären T-Profil versehen sind. Die Achsstummel werden bevorzugterweise mittels Kugellagern drehbar gehalten.

Bei Ausführungsformen mit den Führungsrollen werden die einzelnen Leitungen immer dem gleichen Krümmungsradius unterworfen. Da die Umfangsgeschwindigkeit der Führungsrollen gleich der Abrollgeschwindigkeit der Schlaufenstränge auf dem drehbaren Körper ist, gibt es keine Relativbewegung und daher keine Reibung zwischen den Leitungen und dem drehbaren Körper. Wählt man Ausführungsformen, bei welchen alle Führungsrollen in der gleichen Drehrichtung angetrieben werden, besteht hinsichtlich keiner Führungsrolle eine Relativbewegung zwischen den Leitungen und den Führungsrollen, so daß eine gänzlich abriebfreie Leitungsführung bewirkt wird. Wählt man dagegen Ausführungsformen, bei welchen sich benachbarte Führungsrollen direkt gegenseitig antreiben, so daß jede zweite Führungsrolle eine Relativbewegung zu den Leitungen bildet, kann man durch Wahl des Materials der Führungsrollen oder mindestens der Führungsausnehmungen und durch großzügige Bemessung der Führungsausnehmungen dieser Führungsrollen erreichen, daß trotz dieser Relativbewegung nur ein vernachlässigbarer Abrieb auftritt.

Besonders bevorzugt sind aber Ausführungsformen, bei welchen auch diese Reibung vermieden wird, indem alle Führungsrollen in der gleichen Drehrichtung angetrieben werden. Dies kann dadurch geschehen, daß zwischen je benachbarten Führungsrollen Umkehrrollen zur Umkehr der Drehrichtung benachbarter Führungsrollen angeordnet werden, wobei die Führungsrollen weder mit dem Drehkörper noch mit der Kanalbegrenzung in Eingriff kommen und sich ausschließlich über die Umkehrrollen selbst antreiben.

Zu den besonders bevorzugten Ausführungsformen gehören aber auch solche, bei denen die Führungsrollen mit mindestens dem Umfang des drehbaren Körpers in reib- oder formschlüssigem Eingriff stehen. Reibschlüssiger Eingriff kann dadurch erreicht werden, daß auf dem Umfang einer jeden Führungsrolle ein Reibring, beispielsweise in Form eines o-Ringes aus Gummi oder gummiähnlichem Kunststoff, angeordnet wird, über den der Umfang des drehbaren Körpers einen Reibantrieb auf die jeweilige Führungsrolle ausübt. Formschlüssiger Eingriff kann dadurch erreicht werden, daß sowohl auf dem Umfang des drehbaren Körpers als auch an jeder Führungsrolle ein Zahnkranz angeordnet wird, die bei einer Drehung des drehbaren Körpers miteinander kämmen, was zu einem Antrieb der Führungsrollen führt.

Dabei werden benachbarte Führungsrollen mittels Abstandselementen auf Abstand voneinander gehalten, um zu verhindern, daß die Reibringe bzw. Zahnkränze benachbarter Führungsrollen miteinander in Eingriff kommen. Solche Abstandselemente können entweder durch Abstandsstangen gebildet sein, welche mit achsseitigen Enden benachbarter Führungsrollen verbunden sind, oder es können Abstandsrollen sein, im Fall einer Ausführungsform mit kraftschlüssigem Antrieb zwischen drehbarem Körper und Führungsrollen in Form von Zahnrädern, die je mit den Zahkränzen zweier benachbarter Führungsrollen kämmen.

Eine weitere Möglichkeit besteht darin, nicht nur den Umfang des drehbaren Körpers sondern auch die feststehende Kanalbegrenzung in reib- bzw. formschlüssigem Eingriff mit den Führungsrollen zu halten. Insbesondere im Fall eines formschlüssigen Eingriffs, beispielsweise über die Zahnkränze an den einzelnen Führungsrollen, können die einzelnen Führungsrollen ohne das Zwischenfügen von Abstandselementen auf dem gewünschten Abstand voneinander gehalten werden.

Im Fall eines indirekten Antriebs der Führungsrollen durch den drehbaren Körper kann die Führungsrolle in der Spitze derjenigen Schlaufe, bei welcher infolge der Drehbewegung des drehbaren Körpers der Außenstrang abnimmt und der Innenstrang entsprechend zunimmt, durch eine oder mehrere der Leitungen angetrieben werden. Die dadurch entstehende Belastung der Leitung bzw. Leitungen wird bei einer besonders bevorzugten Ausführungsform für indirekten Antrieb dadurch vermieden, daß in mindestens einer Führungsausnehmung einer jeden Führungsrolle ein Zugseil, vorzugsweise Stahlseil, geführt wird, das so satt in der entsprechend engen Führungsausnehmung liegt und so stramm um die Führungsrollen geführt ist, daß es einen Drehantrieb der Führungsrollen bewirken kann. Die Ausnehmungen für die einzelnen Leitungen sind dabei so großzügig bemessen, daß von den Leitungen keine Drehkräfte auf die Führungsrollen übertragen werden und somit auf die Leitungen wirkende Zugkräfte vermieden werden. Vorzugsweise werden zwei Stahlseile, Gummiseile oder Kunststoffseile verwendet, die in je einer Seilnut an entgegengesetzten axialen Enden der Führungsrollen vorgesehen sind. Anstelle von Zugseilen können auch Antriebsriemen, beispielsweise in Form von Keilriemen oder Zahnriemen, verwendet werden, wobei die entsprechenden Nuten in den Führungsrollen komplementäre Form aufweisen, also keilförmig bzw. mit Zahnkranzprofil ausgebildet sind.

Es besteht auch die Möglichkeit, den indirekten Antrieb über Leitungen oder Zugseile mit dem direkten Antrieb über reib- oder formschlüssigen Eingriff zwischen dem drehbaren Körper und den Führungsrollen zu kombinieren.

Es ist zwar erforderlich, eine geradzahlige Anzahl von Führungsrollen zu verwenden. Diese können aber auf die beiden Schlaufen unterschiedlich aufgeteilt werden. Vorzugsweise teilt man jeder Schlaufe die Hälfte der Anzahl Führungsrollen zu. Es ist aber auch jede andere Aufteilung möglich.

Die Erfindung und Weiterbildungen der Erfindung werden nun anhand von Ausführungsformen näher erläutert. In den Zeichnungen zeigen:

Figur 1      eine schematische Draufsicht auf eine erfindungsgemäße Leitungsführungsanordnung;

Figur 2      einige Führungsrollen in Schrägansicht zusammen mit einer sie tragenden Führungsplatte;

Figur 3      eine Führungsrolle einer Ausführungsform der erfindungsgemäßen Leitungsführungsanordnung in Seitenansicht;

Figur 4      einen schematischen Querschnitt durch eine andere Ausführungsform einer erfindungsgemäßen Leitungsführungsanordnung;

Figur 5      eine Axial-Schnittansicht einer Führungsrolle mit zwei Stahlseilen für indirekten Antrieb;

Figur 6      eine Axial-Schnittansicht einer Führungsrolle mit einem Reibring für reibschlüssigen direkten Antrieb;

Figur 7      einen segmentartigen Ausschnitt des drehbaren Körpers und dreier Führungsrollen gemäß Figur 6 mit Abstandsrollen dazwischen;

Figur 8      eine Figur 1 ähnliche Draufsicht einer Ausführungsform mit direktem formschlüssigen Antrieb der Führungsrollen mittels Zahnkränzen;

Figur 9      eine vergrößerte Ausschnittsdarstellung der Ausführungsform nach Figur 8 mit Abstandsrollen zwischen den Führungsrollen;

Figur 10      eine Seitenansicht der in Figur 9 gezeigten Führungs- und Abstandsrollen;

Figur 11    eine Ausführungsform mit Kugellagerringen als Abstandselementen
            zwischen den Führungsrollen in
            Seitenansicht;

Figur 12    die drei in Figur 11 gezeigten Führungsrollen mit Kugellagerringen in
            Draufsicht;

Figur 13    eine Ausführungsform mit Ab-
            standsstangen zwischen den Füh-
            rungsrollen in Seitenansicht; und

Figur 14    die drei in Figur 13 gezeigten Führungsrollen mit Abstandsstangen in
            Draufsicht.

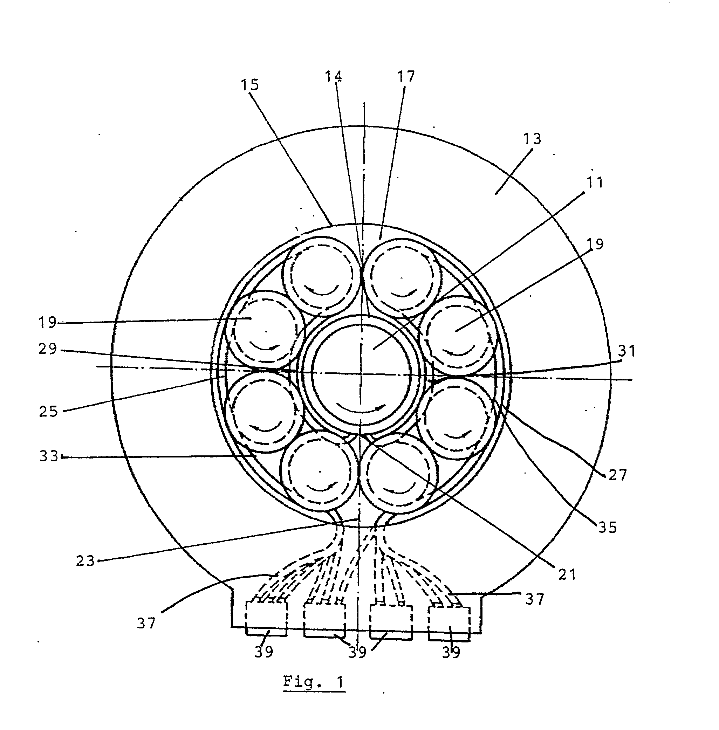

Bei der in Figur 1 gezeigten Ausführungsform ist angenommen, daß ein über Leitungen zu versorgender drehbarer Körper 11 in der Mitte angeordnet ist. Um den drehbaren Körper 11 konzentrisch ist ein Gehäuse 13 angeordnet. Zwischen einem Außenumfang 14 des drehbaren Körpers 11 und einem Innenumfang 15 des Gehäuses 13 ist ein ringförmiger Führungskanal 17 gebildet, in dem mehrere Führungsrollen 19 umlaufen. Die Führungsrollen 19 berühren sich gegenseitig und treiben sich somit gegenseitig an. Zwischen einer mitdrehenden Stelle 21 am Drehkörper 11 und einer feststehenden Stelle 23 am Gehäuse 13 sind eine linke U-förmige Schlaufe 25 und eine rechte U-förmige Schlaufe 27 gelegt, die je eine vorbestimmte Anzahl von in Drehachsenrichtung übereinander angeordneten Leitungen enthalten. Es ist eine gerade Anzahl von Führungsrollen 19 vorgesehen, von denen bei der dargestellten Ausführungsform je eine Hälfte der linken Schlaufe 25 bzw. der rechten Schlaufe 27 zugeordnet ist. Jede Schlaufe weist einen am Außenumfang 14 des drehbaren Körpers 11 abrollenden Innenstrang 29 bzw. 31 und einen am Innenumfang 15 des Gehäuses 13 abrollenden Außenstrang 33 bzw. 35 auf. An den feststehenden Stellen 23 sind die Leitungen 37 der Schlaufen 25 und 27 bei dem dargestellten Ausführungsbeispiel an Verbinder 39 angeschlossen.

Dreht sich der drehbare Körper 11 in dem durch einen Pfeil angedeuteten Gegenuhrzeigersinn, wird über die mitdrehende Stelle 21 auch der Innenstrang 29 der linken Schlaufe 25 im Gegenuhrzeigersinn gezogen. Als Folge davon wickelt sich eine zunehmende Länge des Innenstrangs 29 auf den Außenumfang 14 des drehbaren Körpers 11 auf. Dabei wird die Führungsrolle 19, die sich an der Verbindungsstelle der beiden Stränge 29 und 33 der linken Schlaufe 25 befindet, von dem sich aufwickelnden Innenstrang 29 gedreht, was zur Drehung auch der restlichen Führungsrollen führt. Bei dieser Drehbewegung des drehbaren Korpers 11 wird ein zunehmender Bereich des Außenstrangs 33 über die führende Kabelrolle 19 dieser Schlaufe 25 in den Bereich des Innenstrangs 29 gebracht. D.h., ein zunehmender Bereich der linken Schlaufe 25 wird von dem Innenumfang 15 des Gehäuses 13 abgerollt und auf den Außenumfang 14 des drehbaren Körpers 11 aufgerollt.

Durch den gegenseitigen Antrieb der Führungsrollen 19 werden auch die in der rechten Schlaufe 27 befindlichen Führungsrollen 19 angetrieben. Aufgrund der Drehbewegung des drehbaren Körpers 11 und der Führungsrollen 19 wird ein zunehmender Teil der rechten Schlaufe 27 von deren Innenstrang 31 zu deren Außenstrang 35 umgeleitet. D.h., die Umverteilung zwischen Außenstrang und Innenstrang ist bei den beiden Schlaufen 25 und 27 gegenläufig.

Wird der Drehkörper 11 im Uhrzeigersinn gedreht, erfolgt eine entgegengesetzte Bewegung der beiden Schlaufen 25 und 27.

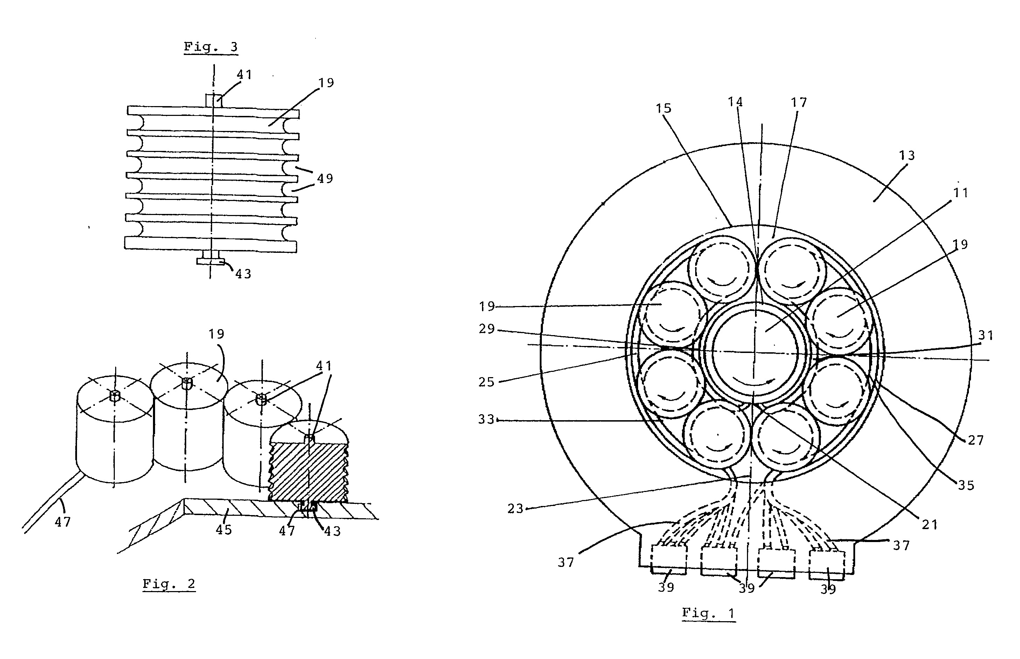

Wie in der schematischen Darstellung in Figur 2 gezeigt ist, weisen die einzelnen Führungsrollen 19 an ihren axialen Längsenden je obere Achsstummel 41 und untere Achsstummel 43 auf, die je in dem Führungsschlitz einer oberen bzw. einer unteren Führungsplatte drehbar geführt sind. In Figur 2 ist nur die untere Führungsplatte 45 mit ihrem Führungsschlitz 47 gezeigt.

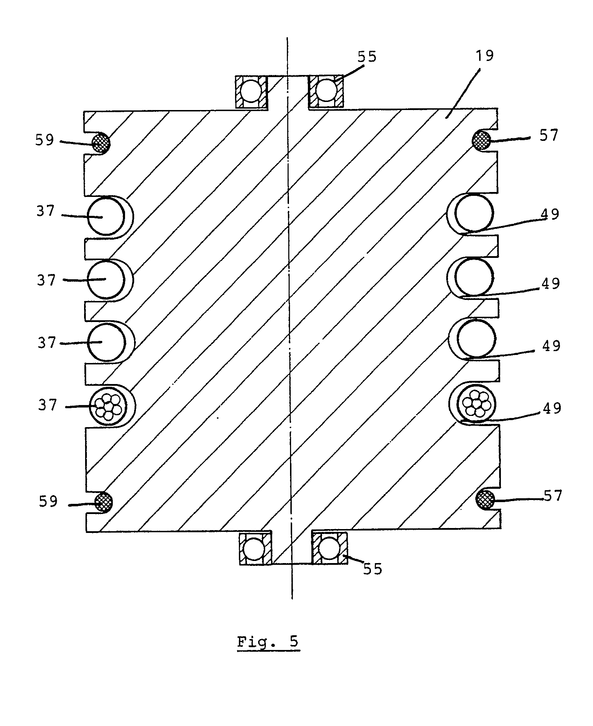

Vorzugsweise ist der Führungsschlitz 47 T-förmig ausgebildet und weisen die unteren Achsstummel 43 ein komplementäres T-Profil auf. Es ist auch eine Kugellagerung im Führungsschlitz 47 möglich. Bei der in Figur 5 gezeigten Ausführungsform sind entsprechende Kugellager 55 an den Achsstummeln 41 und 43 vorgesehen.

In Figur 3 ist eine Seitenansicht einer Führungsrolle mit axial übereinander angeordneten Führungsausnehmungen 49 gezeigt. Bei derartiger Ausbildung der Führungsrollen 19 werden die Leitungen 37 in den Kanälen geführt, die zwischen den Führungsausnehmungen 49 und dem sie begrenzenden Außenumfang 14 des drehbaren Körpers 11 bzw. dem Innenumfang 15 des Gehäuses 13 gebildet sind.

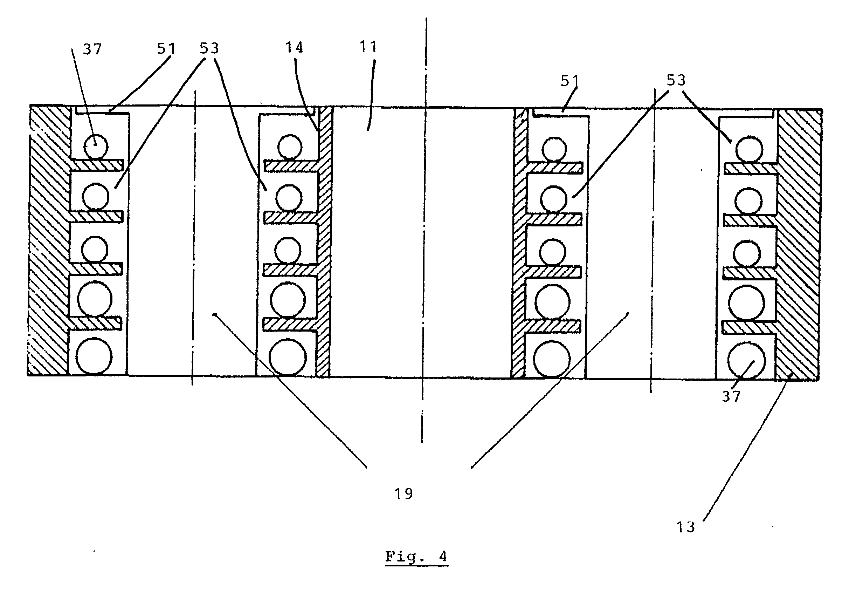

Figur 4 zeigt in schematischem Querschnitt eine Ausführungsform der Erfindung, bei welcher die Führungsrollen 19 mit einem glatten Außenumfang versehen sind und lediglich an ihren oberen Enden Radialflansche 51 zur Abdeckung aufweisen. Bei dieser Ausführungsform sind Führungsausnehmungen 53 in dem Außenumfang 14 des drehbaren Körpers 11 und in dem Innenumfang 15 des Gehäuses 13 vorgesehen.

Eine weitere Möglichkeit wäre die, sowohl die Außenumfänge der Führungsrollen 19 als auch den Außenumfang 14 des drehbaren Körpers 11 als auch den Innenumfang 15 des Gehäuses 13 mit Führungsausnehmungen 49 bzw. 53 zu versehen. Die Leitungsaufnahmekanäle würden dann durch je zwei sich gegenüberstehende Führungsausnehmungen 49 und 53 gebildet.

Figur 5 zeigt eine Axial-Schnittansicht einer Führungsrolle mit Führungsausnehmungen 49, in denen Leitungen 37 locker geführt werden. Zusätzlich ist an jedem axialen Ende der Führungsrolle eine Seilnut 57 zur Aufnahme eines Zugseils 59, vorzugsweise in Form eines Stahlseils, vorgesehen. Die Seilnuten 57 sind so dimensioniert, daß die Zugseile 59 stramm in der Seilnut 57 geführt werden, damit die Führungsrollen 19 schlupffrei von den Zugseilen 59 angetrieben werden können.

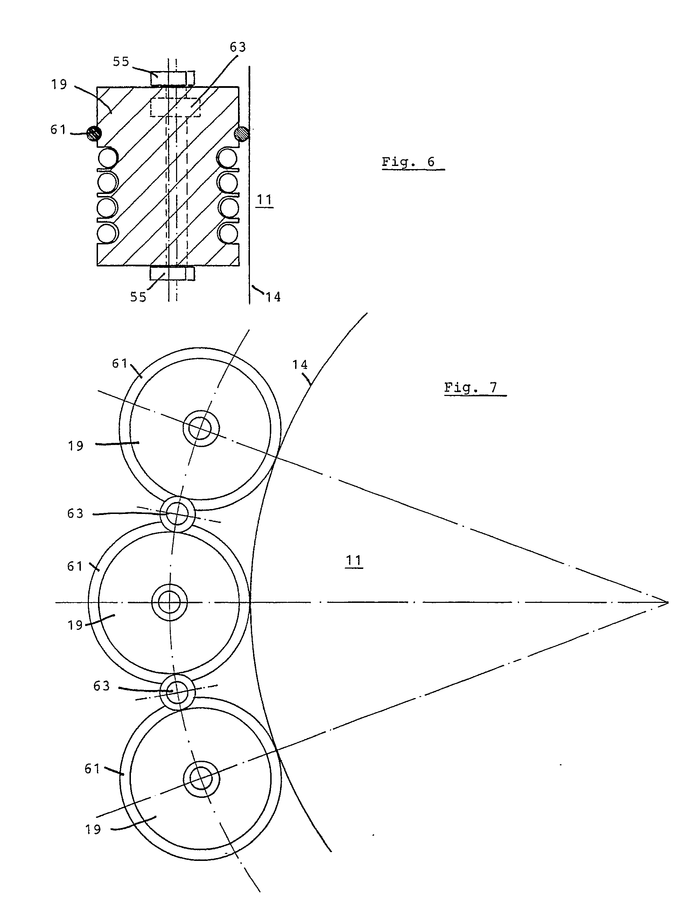

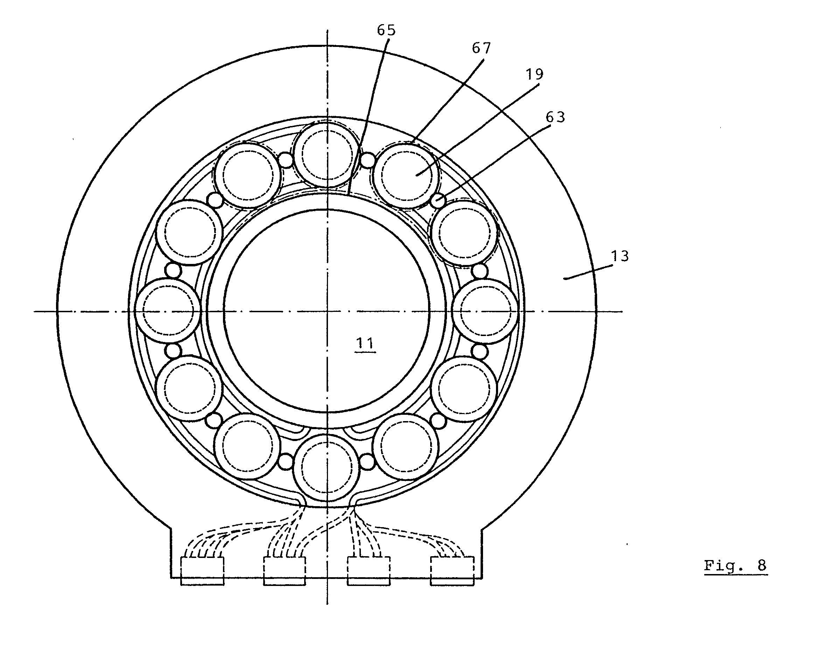

Die Figuren 6 und 7 gehören zu einer Ausführungsform, bei welcher die einzelnen Führungsrollen über einen reibschlüssigen Eingriff mit dem Außenumfang 14 des drehbaren Körpers 11 direkt angetrieben werden. Zu diesem Zweck ist auf dem Außenumfang einer jeden Führungsrolle ein Reibring 61 angeordnet, vorzugsweise in Form eines O-Ringes aus Gummi oder einem gummiartigen Kunststoff. Der Reibring 61 läuft auf dem Außenumfang 14 des drehbaren Körpers 11. Wie Figur 7 zeigt, sind zwischen den Führungsrollen 19 Abstandsrollen 63 angeordnet, welche verhindern, daß sich in entgegengesetzte Richtung bewegende Umfangsbereiche benachbarter Führungsrollen 19 berühren. Bei der in Figur 7 dargestellten Ausführungsform rollen die Abstandsrollen 63 auf Umfangsbereichen der Führungsrollen 19 ab, die außerhalb der Reibringe 61 liegen. Es besteht natürlich auch die Möglichkeit, die Abstandsrollen 63 auf den Reibringen 61 laufen zu lassen.

Ein Ausführungsbeispiel mit kraftschlüssigem Direktantrieb zwischen dem drehbaren Körper 11 und den Führungsrollen ist in Figur 8 gezeigt. Dabei ist der Außenumfang 14 des drehbaren Körpers 11 mit einem Zahnkranz 65 versehen, mit dem Zahnkränze 67 im kraftschlüssigen Eingriff stehen, die auf dem Umfang der Führungsrollen 19 angeordnet sind oder durch Zahnräder an den axialen Enden der Führungrollen 19 gebildet sind. Zwischen den einzelnen Führungsrollen 19 befinden sich wieder Abstandsrollen oder Abstandsräder 63.

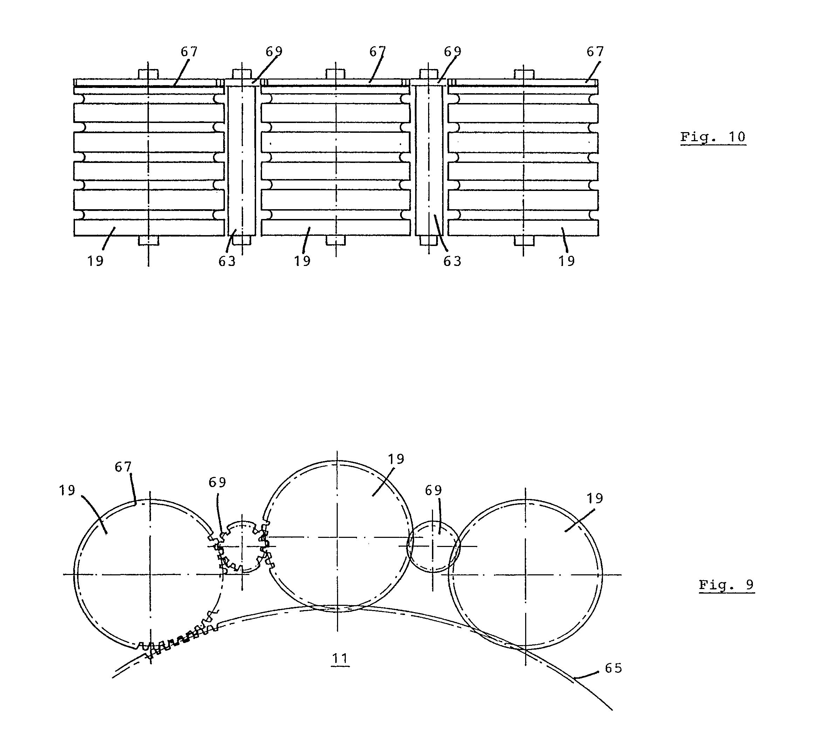

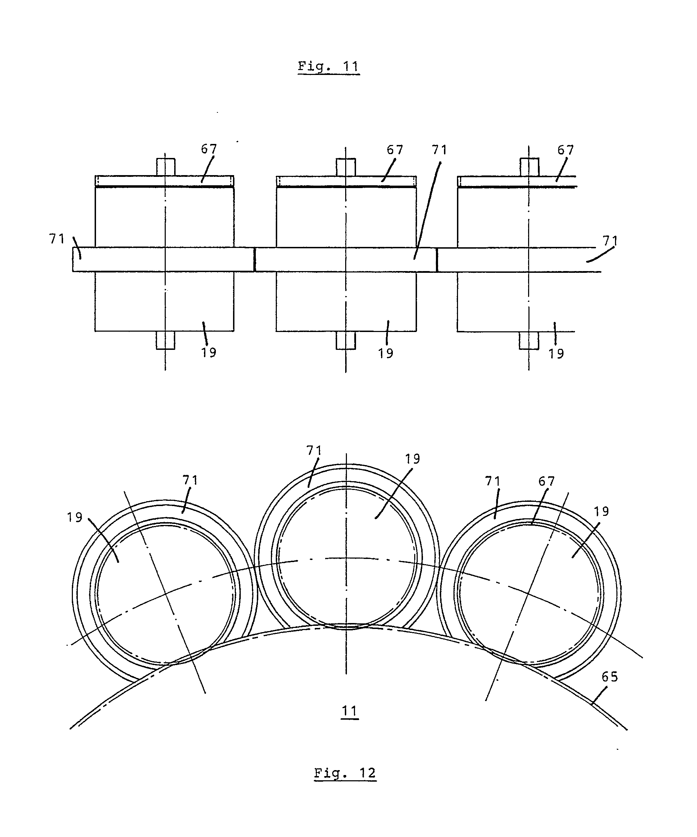

Ein Ausschnittssektor der in Figur 8 gezeigten Ausführungsform ist in Figur 9 dargestellt. Dabei sind drei Führungsrollen 19 gezeigt, die je mit einem Zahnkranz 67 versehen sind, der mit dem Zahnkranz 65 am Außenumfang 14 des drehbaren Körpers 11 kämmt. Die Abstandsrollen 63 sind dabei mit Zahnrädern 69 ausgestattet, die mit den Zahnkränzen 67 je zweier benachbarter Führungsrollen 19 kämmen. Wie Figur 10 zeigt, sind die Zahnkränze 67 und Zahnräder 69 an einem axialen Ende der Führungsrollen 19 bzw. Abstandsrollen 63 vorgesehen. Die Zahnkränze 67 und Zahnräder 69 können jedoch auch an den anderen axialen Enden von Führungsrollen 19 bzw. Abstandsrollen 63 angeordnet sein oder auch an beiden axialen Enden.

Die Figuren 11 und 12 zeigen eine Ausführungsform mit formschlüssigem direkten Antrieb, bei welchem die Abstandselemente durch Kugellagerringe 71 gebildet sind, die axial mittig auf dem Außenumfang der Führungsrollen 19 angeordnet sind. Während einer Drehbewegung des drehbaren Körpers 11, bei welcher die Führungsrollen 19 aufgrund des formschlüssigen Eingriffs zwischen den Zahnkränzen 65 und 67 alle in gleicher Richtung gedreht werden, laufen die Außenumfänge benachbarter Kugellagerringe 71 aufeinander ab, ohne die Drehbewegung der Führungsrollen 19 zu behindern.

Es besteht natürlich auch die Möglichkeit, die Kugellagerringe 71 an anderer axialer Stelle der Führungsrollen 19 anzuordnen, beispielsweise an dem axialen Ende, an welchem sich kein Zahnkranz 67 befindet, oder an beiden axialen Enden.

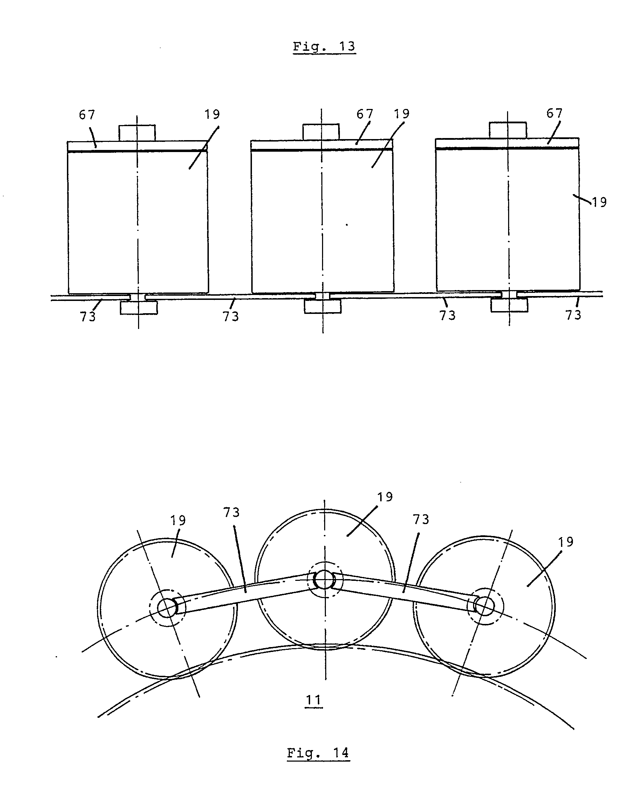

Eine weitere Möglichkeit, die einzelnen Führungsrollen 19 auf Abstand voneinander zu halten, ist in den Figuren 13 und 14 gezeigt. Dabei sind Abstandsstangen 73 vorgesehen, deren Enden je an den Achsstummeln zweier benachbarter Führungsrollen 19 drehbar gehalten sind. Bei der dargestellten Ausführungsform sind die Abstandsstangen an den Achsstummeln befestigt, bei denen sich keine Zahnkränze 67 befinden. Es besteht auch die Möglichkeit, die Abstandsstangen 73 an den den Zahnkränzen 67 benachbarten Achsstummeln anzulenken oder die Führungsrollen an beiden axialen Enden mit Abstandsstangen 73 miteinander zu verbinden.

**Patentansprüche**

1. Anordnung zum Führen von Leitungen (37) zwischen einer festen Stelle (23) und einer mit einem hin- und herdrehbaren Körper (11) mitdrehenden Stelle (21), wobei mehrere Leitungen (37) in Drehachsenrichtung nebeneinander in zur Drehachse konzentrischer U-Schlaufenform (25, 27) verlaufen und die zu verschiedenen Schlaufensträngen (29, 31, 33, 35) gehörenden freien Strangenden mit der festen Stelle (23) bzw. der mitdrehenden Stelle (21) verbunden sind,
dadurch **gekennzeichnet,**
daß die Leitungen (37) auf zwei bezüglich der Drehachse gegenläufige Schlaufen (25, 27) aufgeteilt sind, die sich auf je verschiedener Seite der Drehachse befinden.

2. Anordnung nach Anspruch 1,
dadurch gekennzeichnet,
daß die Schlaufen (25, 27) in einem ringförmigen Führungskanal (17) zwischen dem drehbaren Körper (11) und einer Kanalbegrenzungseinrichtung (15) geführt sind.

3. Anordnung nach Anspruch 2,
dadurch gekennzeichnet,
daß der Führungskanal (17) innenseitig durch den Außenumfang (14) des drehbaren Körpers (11) und außenseitig durch ein zu dem drehbaren Körper (11) konzentrisch angeordnetes Gehäuse (13) gebildet ist.

4. Anordnung nach einem der Ansprüche 1 bis 3,
dadurch gekennzeichnet,
daß jede Schlaufe (25, 27) durch eine Schleppkette gebildet ist, in deren Kettengliedern Leitungshalterungseinrichtungen vorgesehen sind.

5. Anordnung nach einem der Ansprüche 1 bis 3,
dadurch gekennzeichnet,
daß konzentrisch zur Drehachse des drehbaren Körpers (11) ringartig aufgereiht Führungsrollen (19) angeordnet sind, deren Drehachsen parallel zur Drehachse des drehbaren Körpers (11) verlaufen, die je zwischen den Schlaufensträngen (29, 33 bzw. 31, 35) der einen (25) bzw. der anderen (27) Schlaufe angeordnet sind und durch die Drehbewegung des drehenden Körpers (11) direkt oder indirekt derart angetrieben werden, daß die Umfangsgeschwindigkeit der Führungsrollen (19) gleich der Abrollgeschwindigkeit der Schlaufenstränge (29, 31, 33, 35) auf dem drehbaren Körper (11) und auf den Führungsrollen (19 ) ist.

6. Anordnung nach Anspruch 5,
dadurch gekennzeichnet,
daß die Außenumfänge der Führungsrollen (19) und/oder der Außenumfang und der Innenumfang des Führungskanals (17) mit Führungsausnehmungen (49, 53) versehen sind, deren Zahl und Form von der Anzahl und den Abmessungen der zu führenden Leitungen (37) abhängen.

7. Anordnung nach Anspruch 5 oder 6,
dadurch gekennzeichnet,
daß die Führungsrollen (49) an jedem axialen Längsende in einem Führungsschlitz (47) je einer Führungsplatte (45) verschiebbar und drehbar gehalten sind.

8. Anordnung nach Anspruch 7,
dadurch gekennzeichnet,
daß mindestens einer der Führungsschlitze (47) als T-Nut ausgebildet ist und darin gelagerte Achsstummel (43) der Führungrollen (19) je mit einem komplementären T-Profil ausgebildet sind.

9. Anordnung nach Anspruch 7 oder 8,
dadurch gekennzeichnet,

daß die Führungsrollen (19) an mindestens einem axialen Ende mittels Kugellagern (55) drehbar gehalten sind.

10. Anordnung nach mindestens einem der Ansprüche 7 bis 9,
dadurch gekennzeichnet,
daß jeder Führungsschlitz (47) als Kugellagerbahn ausgebildet ist.

11. Anordnung nach mindestens einem der Ansprüche 5 bis 10,
dadurch gekennzeichnet,
daß die Führungsrollen (19) sich gegenseitig antreiben.

12. Anordnung nach Anspruch 11,
dadurch gekennzeichnet,
daß zwecks gegenseitigen Drehantriebs der Führungsrollen (19) die Umfänge je benachbarter Führungsrollen (19) aufeinander abrollen.

13. Anordnung nach Anspruch 11,
dadurch gekennzeichnet,
daß zwischen den Führungsrollen (19) Umkehrelemente angeordnet sind, welche die Drehrichtung benachbarter Führungsrollen (19) umkehren, so daß alle Führungsrollen (19) jeweils die gleiche Drehrichtung aufweisen.

14. Anordnung nach einem der Ansprüche 11 bis 13,
dadurch gekennzeichnet,
daß bei einer Drehung des drehbaren Körpers (11) die in der Schlaufe mit abnehmendem Außenstrang (25 bzw. 27) in der Schlaufenspitze liegende Führungsrolle (19) von mindestens einer der Leitungen (37) angetrieben wird.

15. Anordnung nach einem der Ansprüche 11 bis 13,
dadurch gekennzeichnet,
daß in mindestens einer Seilnut (57) einer jeden Führungsrolle (19) ein Zugseil (59) geführt ist, das stramm in dieser Seilnut (57) liegt und bei einer Drehung des drehbaren Körpers (11) diejenige Führungsrolle (19), die in der Spitze der Schlaufe mit abnehmendem Außenstrang (25 bzw. 27) liegt, antreibt, wohingegen die Leitungen (37) locker in ihren Führungsausnehmungen (49) liegen.

16. Anordnung nach Anspruch 15,
dadurch gekennzeichnet,
daß in mindestens einer Keil- oder Zahnnut einer jeden Führungsrolle (19) anstelle eines Zugseils ein Keil- oder Zahnriemen geführt ist.

17. Anordnung nach mindestens einem der Ansprüche 5 und 6 bis 10,
dadurch gekennzeichnet,
daß die Führungsrollen (19) an ihrem Umfang
mit dem Umfang (14) des drehbaren Körpers
(11) in sie mitdrehendem reib- oder formschlüssigen Antriebseingriff stehen.

18. Anordnung nach Anspruch 17,
dadurch gekennzeichnet,
daß der Umfang einer jeden Führungsrolle (19)
von mindestens einem Reibring (61) umgeben
ist.

19. Anordnung nach Anspruch 17,
dadurch gekennzeichnet,
daß jede Führungsrolle (19) mit mindestens
einem Zahnkranz (67) versehen ist, der mit
einem entsprechenden Zahnkranz (65) am
drehbaren Körper (11) kämmt.

20. Anordnung nach Anspruch 18 oder 19,
dadurch gekennzeichnet,
daß die Führungsrollen (19) mittels zwischen
ihnen angeordneten Abstandselementen (63;
69; 71; 73) außer Eingriff miteinander gehalten
werden.

21. Anordnung nach Anspruch 20,
dadurch gekennzeichnet,
daß die Abstandselemente durch Abstandsrollen (63; 63, 69; 71) gebildet sind, die zwischen
je zwei benachbarten Führungsrollen (19) angeordnet sind und mit diesen in reib- bzw.
formschlüssigem Eingriff stehen.

22. Anordnung nach Anspruch 21,
dadurch gekennzeichnet,
daß die Abstandsrollen durch Kugellagerringe
(71) gebildet sind, die zu den Führungsrollen
(19) konzentrisch angeordnet sind.

23. Anordnung nach mindestens einem der Ansprüche 17 bis 22,
dadurch gekennzeichnet,
daß die Führungsrollen (19) auch mit der Kanalbegrenzungseinrichtung (15) in reib- oder
formschlüssigem Eingriff stehen.

Fig. 1

Fig. 1

Fig. 2

Fig. 3

Fig. 4

Fig. 5

Fig. 6

Fig. 7

Fig. 8

Fig. 10

Fig. 9

15

Fig. 11

<u>11</u>

Fig. 12

Fig. 13

67     19         67   19          67

19

73         73         73        73

19     73        19        73       19

11

Fig. 14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-7 732 412   (PAUL VAHLE GmbH & CO. KG) <br> * Figuren 1-3; Anspruch 1 * | 1,2,5,6 | F 16 <br> L 3/01 |
| A |  | 3,14,20, 23 | H 02 G 11/00 <br> B 25 J 19/00 |
|  | – – – |  |  |
| X | EP-A-0 179 156   (FANUC LTD) <br> * Ansprüche 1,6; Figuren 3-5 * | 1,4 |  |
| A |  | 2,3 |  |
|  | – – – |  |  |
| A | US-A-4 299 662   (HARDIN) |  |  |
|  | – – – |  |  |
| X | JP-Y-5 615 885   (TSUBAKIMOTO CHAIN CO.) <br> * Figuren 1-4 * | 1,2,4 |  |
|  | – – – – – |  |  |

RECHERCHIERTE SACHGEBIETE (Int. Cl.5)

F 16 L
H 02
G
B 25 J

Der vorliegende Recherchenbericht wurde für alle Patentansprüche erstellt

| Recherchenort | Abschlußdatum der Recherche | Prüfer |
|---|---|---|
| Den Haag | 09 April 91 | BUDTZ-OLSEN A. |